# EUROPÄISCHE PATENTANMELDUNG

(11) **EP 3 890 175 A1**
(43) Veröffentlichungstag der Anmeldung: **06.10.2021**
(21) Anmeldenummer: 20167100.5
(22) Anmeldetag: 31.03.2020
(51) Int. Cl.: H02M 3/156, H02M 3/158, B23K 9/10

(54) **GLEICHSPANNUNGSWANDLER FÜR EIN SCHWEISSGERÄT UND VERFAHREN ZUM BETREIBEN EINES GLEICHSPANNUNGSWANDLERS EINES SCHWEISSGERÄTS**

(71) Anmelder: Fronius International GmbH, 4643 Pettenbach (AT)
(72) Erfinder: Knoll, Thomas, 4600 Wels-Thalheim (AT)
(74) Vertreter: Patentanwälte Pinter & Weiss OG

(57) **Zusammenfassung**

Um für ein Schweißgerät (1) Energieverluste im Leerlauf (L) zu reduzieren und einen sauberen und kontrollierten Start der Schweißphase (X) zu ermöglichen, wobei ein Gleichspannungswandler (2) des Schweißgeräts (1) eine an einem Eingangsanschluss (Ue+) anliegende Eingangsgleichspannung (Ue) in eine an einem Ausgangsanschluss (Ua+) anliegende Ausgangsgleichspannung (Ua) wandelt, wobei zumindest ein Schaltelement (S1) eines Zweiges (A) des Gleichspannungswandlers (2) mit einer Schaltfrequenz (f1) geschaltet wird, wobei für das Schweißgerät (1) eine Schweißphase (X) vorgesehen ist, während welcher die Schaltfrequenz (f1) einer Normalschaltfrequenz (f1x) entspricht ist erfindungsgemäß für das Schweißgerät (1) eine Leerlaufphase (L) vorgesehen ist, während welcher das zumindest eine Schaltelement (S1) mit einer Schaltfrequenz (f1) entsprechend einer Leerlaufschaltfrequenz (f1L) kleiner der Normalschaltfrequenz (f1x) geschaltet wird.

## Beschreibung

Die gegenständliche Erfindung betrifft ein Verfahren zum Betreiben eines Schweißgeräts, wobei ein Gleichspannungswandler des Schweißgeräts eine an einem Eingangsanschluss anliegende Eingangsgleichspannung in eine an einem Ausgangsanschluss anliegende Ausgangsgleichspannung wandelt, wobei zumindest ein Schaltelement des Gleichspannungswandlers mit einer Schaltfrequenz geschaltet wird, wobei für das Schweißgerät eine Schweißphase vorgesehen ist, während welchem die Schaltfrequenz einer Normalschaltfrequenz entspricht. Weiters betrifft die gegenständliche Erfindung einen Gleichspannungswandler für ein Schweißgerät wobei der Gleichspannungswandler ausgestaltet ist eine an einem Eingangsanschluss anliegende Eingangsgleichspannung in eine an einem Ausgangsanschluss anliegende Ausgangsgleichspannung zu wandeln, wobei der Gleichspannungswandler zumindest ein Schaltelement in einem Zweig und eine Regeleinheit umfasst, wobei die Regeleinheit ausgestaltet ist, in einer Schweißphase des Schweißgeräts das Schaltelement mit einer Schaltfrequenz entsprechend einer Normalschaltfrequenz zu schalten. Zudem betrifft die gegenständliche Erfindung ein Schweißgerät umfassend einen Gleichspannungswandler und ein Schweißleistungsteil, wobei das Schweißleistungsteil ausgestaltet ist, in der Schweißphase die Ausgangsgleichspannung auf eine Schweißspannung zu regeln.

Gleichspannungswandler wandeln eine Eingangsgleichspannung auf einer Eingangsseite in eine Ausgangsgleichspannung auf einer Ausgangsseite um. Bei einem Aufwärtswandler, auch Hochsetzsteller genannt, ist die Ausgangsgleichspannung größer als die Eingangsgleichspannung, wogegen bei einem Abwärtswandler, auch Tiefsetzsteller genannt, die Ausgangsgleichspannung kleiner als die Eingangsgleichspannung ist. Im Bereich der Schweißtechnik werden insbesondere Aufwärtswandler verwendet.

Es wird in einem Schweißgerät somit beispielsweise ein Aufwärtswandler als Gleichspannungswandler verwendet, welcher eine Eingangsgleichspannung an einer Eingangsseite in eine höhere Ausgangsgleichspannung an einer Ausgangsseite wandelt. Dabei wird beim Schweißvorgang während einer Schweißphase Energie von der Eingangsseite auf die Ausgangsseite übertragen, wobei eine Schweißphase mit einer Zündung eines Lichtbogens beginnt. Die Ausgangsseite des Gleichspannungswandlers kann mit einem parallelen Zwischenkreiskondensator versehen sein, womit die Ausgangsgleichspannung am Zwischenkreiskondensator anliegt. Um dem Schweißvorgang während der Schweißphase unter anderem ausreichende Schweißspannung zur Verfügung zu stellen, ist der Ausgangsseite des Gleichspannungswandlers, d.h. dem Zwischenkreiskondensator, ein Schweißleistungsteil nachgeschaltet. Das Schweißleistungsteil regelt die Ausgangsgleichspannung auf eine geeignete, vorzugweise potentialgetrennte, Schweißspannung und/oder einen Schweißstrom, wobei die Schweißspannung / der Schweißstrom gepulst und/oder kontinuierlich ausgegeben werden kann, je nachdem gewünschten Schweißvorgang. Ein derartiges Schweißgerät ist beispielsweise in der EP 2850725 B1 offenbart.

Beim Betrieb eines Schweißgeräts werden die Schweißphasen jedoch von Leerlaufphasen, in welchen nicht geschweißt wird, unterbrochen. Während dieser Leerlaufphasen wird vom Gleichspannungswandler weiterhin eine geringe Menge an Energie an das mit dem Ausgang verbundene Schweißleistungsteil übertragen, beispielsweise um im Schweißgerät vorhandene Ansteuerelektronikeinheiten, Regelungseinheiten, Displays, etc. zu betreiben. Da in der Leerlaufphase kein Lichtbogen brennt, ist die Energiemenge geringer. Der Gleichspannungswandler ist allerdings sowohl in den Schweißphasen als auch in den Leerlaufphasen des Schweißgeräts in Betrieb, wobei natürlich auch während den Leerlaufphasen im Gleichspannungswandler signifikante Energieverluste auftreten.

Es ist daher eine Aufgabe der gegenständlichen Erfindung einen Gleichspannungswandler für ein Schweißgerät anzugeben, welcher einen sauberen und kontrollierten Start der Schweißphase ermöglicht.

Diese Aufgabe wird erfindungsgemäß durch ein Verfahren gelöst, indem für das Schweißgerät eine Leerlaufphase vorgesehen ist, während welcher das Schaltelement mit einer Schaltfrequenz entsprechend einer Leerlaufschaltfrequenz kleiner der Normalschaltfrequenz geschaltet wird. Weiters wird die Aufgabe durch einen Gleichspannungswandler gelöst, wobei die Regeleinheit ausgestaltet ist, in einer Leerlaufphase des Schweißgeräts das Schaltelement mit einer Schaltfrequenz entsprechend einer Leerlaufschaltfrequenz kleiner der Normalschaltfrequenz zu schalten. Zudem wird die Aufgabe durch ein Schweißgerät umfassend einen erfindungsgemäßen Gleichspannungswandler und ein Schweißleistungsteil gelöst, wobei das Schweißleistungsteil ausgestaltet ist, in der Schweißphase die Ausgangsgleichspannung auf eine Schweißspannung zu regeln. Während der Schweißphase wird Energie vom Eingang des Gleichspannungswandlers auf den Ausgang des Gleichspannungswandlers übertragen. Die Regelung auf die Schweißspannung ist natürlich nur beispielhaft, selbstverständlich kann die Ausgangsgleichspannung derart geregelt werden, dass sich ein Schweißstrom einstellt, oder dass sich sowohl eine Schweißspannung, als auch einen Schweißstrom einstellt. In diesem Zusammenhang wird von einer Konstant-Spannungsregelung/Konstant-Stromregelung gesprochen.

Da in einer Leerlaufphase des Schweißgeräts das Schaltelement des Gleichspannungswandler nicht deaktiviert wird, sondern lediglich die Schaltfrequenz des Schaltelements auf die Leerlaufschaltfrequenz reduziert wird, bleibt während der Leerlaufphase des Schweißgeräts am Ausgangsanschluss die gewünschte Ausgangsgleichspannung für die Schweißphase erhalten. Diese Ausgangsgleichspannung ist für den Betrieb des Schweißgeräts in der Leerlaufphase (beispielsweise eine Versorgung von Ansteuerelektronikeinheiten, Regelungseinheiten, Displays, etc.) ausreichend. Im Gegensatz zu einem dauerhaften Betrieb des Schaltelements mit der Normalschaltfrequenz (auch während der Leerlaufphase) sind bei Verwendung der Leerlaufschaltfrequenz in der Leerlaufphase die Energieverluste während der Leerlaufphase signifikant reduziert.

Weiters wird durch die auch während der Leerlaufphase am Ausgangsanschluss anliegende Ausgangsgleichspannung in einer erforderlichen Höhe sichergestellt, dass ein kontrollierter und sauberer Start des Schweißvorgangs bereits direkt beim Start der Schweißphase gewährleistet ist.

Vorzugsweise wird in der Schweißphase die Ausgangsgleichspannung durch ein Schweißleistungsteil auf eine Schweißspannung geregelt, wobei eine Last mit der Schweißspannung versorgt wird.

Vorzugsweise umfasst der Zweig eine Induktivität und eine Freilaufdiode, wobei ein erster Spulenanschluss der Induktivität mit dem Eingangsanschluss verbunden ist und ein zweiter Spulenanschluss der Induktivität mit einem ersten Schalteranschluss des Schaltelements und einer Anode der Freilaufdiode verbunden ist, wobei ein zweiter Schalteranschluss des Schaltelement mit Masse verbunden ist und eine Kathode der Freilaufdiode mit dem Ausgangsanschluss verbunden ist.

Diese Anordnung beschreibt einen Aufwärtswandler, wobei die Erfindung auch auf weitere Ausgestaltungen von Aufwärtswandlern angewendet werden kann. Es ist natürlich auch vorstellbar, dass das erfindungsgemäße Verfahren auf einem anderen Typ von Gleichspannungswandler (Abwärtswandler, Buck-Boost, ...) Anwendung findet.

Vorzugsweise wird zumindest ein weiteres Schaltelement zumindest eines weiteren Zweigs des Gleichspannungswandlers mit zumindest einer weiteren Schaltfrequenz geschaltet, wobei in der Schweißphase die zumindest eine weitere Schaltfrequenz einer weiteren Normalschaltfrequenz entspricht. Das erfindungsgemäße Verfahren kann somit auch auf Gleichspannungswandler mit mehreren Schaltelementen Anwendung finden.

Der Gleichspannungswandler kann zumindest einen weiteren Zweig mit zumindest einem weiteren Schaltelement, zumindest einer weiteren Induktivität und zumindest einer weiteren Freilaufdiode umfassen, wobei im zumindest einen weiteren Zweig jeweils ein erster Spulenanschluss der zumindest einen weiteren Induktivität mit der Eingangsspannung verbunden ist und jeweils ein zweiter Spulenanschluss der zumindest einen weiteren Induktivität mit jeweils einem ersten Schalteranschluss des zumindest einen weiteren Schaltelements und jeweils einer Anode der zumindest einen weiteren Freilaufdiode verbunden ist, wobei jeweils ein zweiter Schalteranschluss des zumindest einen weiteren Schaltelements mit Masse verbunden ist und jeweils eine Kathode der zumindest einen Freilaufdiode mit dem Ausgangsanschluss verbunden ist, wobei die Regeleinheit ausgestaltet, während der Schweißphase des Schweißgeräts das zumindest eine weitere Schaltelement mit zumindest einer weitere Schaltfrequenz entsprechend einer weiteren Normalschaltfrequenz zu schalten.

Dies beschreibt einen mehrzweigigen Aufwärtswandler, wobei natürlich auch andersartig ausgestaltete mehrzweigige Aufwärtswandler, Abwärtswandler oder allgemein Gleichspannungswandler, welche eine erfindungsgemäße Regeleinheit umfassen, vorstellbar sind.

Die eine weitere Normalschaltfrequenz kann der Normalschaltfrequenz entsprechen. Damit ist in der Schweißphase eine besonders einfache Ansteuerung der Schaltelemente durch die Regeleinheit möglich. Besonders vorteilhaft ist es, wenn die Schaltelemente der Zweige phasenverschoben geschaltet werden. So wird bei einem Wandler mit n Zweigen der i-te Zweig (mit 1 ≤ i ≤ n) mit einer zeitlichen Verschiebung von (T ^{∗} (i-1))/n Periodendauer zum ersten Zweig eingeschaltet, wobei T der Periodendauer entspricht. Dieses Verfahren ist als "interleaved operating mode" bekannt.

Vorzugsweise wird in der Leerlaufphase die zumindest eine weitere Schaltfrequenz mit einer weiteren Leerlaufschaltfrequenz kleiner der weiteren Normalschaltfrequenz geschaltet.

Dementsprechend kann die Regeleinheit ausgestaltet sein in der Leerlaufphase das zumindest eine weitere Schaltelement mit einer weiteren Leerlaufschaltfrequenz kleiner der weiteren Normalschaltfrequenz zu schalten.

Weist der Gleichspannungswandler zumindest ein weiteres Schaltelement auf, so kann eine Anzahl dieser Schaltelemente, vorzugsweise alle Schaltelemente jeweils mit einer Leerlaufschaltfrequenz kleiner der weiteren Normalschaltfrequenz geschaltet, um die Leerlaufverlustleistung weiter zu reduzieren.

Es kann die zumindest eine weitere Leerlaufschaltfrequenz der Leerlaufschaltfrequenz entsprechen, womit in der Leerlaufphase eine besonders einfache Ansteuerung der Schaltelemente durch die Regeleinheit möglich ist

Vorzugsweise wird in der Leerlaufphase das zumindest eine weitere Schaltelement deaktiviert. Entsprechend kann die Regeleinheit ausgestaltet sein in der Leerlaufphase das zumindest eine weitere Schaltelement zu deaktivieren.

Es können somit bei Vorhandensein mehrerer Schaltelemente auch mehrere Schaltelemente, vorzugsweise alle Schaltelemente bis auf eines deaktiviert werden um eine maximale Reduktion der Leerlaufverlustleistung in der Leerlaufphase zu erreichen. Zumindest ein Schaltelement wird währenddessen mit der Leerlaufschaltfrequenz betrieben, um während der Leerlaufphase ein Absinken der Ausgangsgleichspannung zu verhindern und einen schnellen Start des Schweißvorgangs bereits zu Beginn der Schweißphase zu ermöglichen. Es konnten Reduktionen der Leerlaufverlustleistung von 43 W auf 2 W gemessen werden, wenn im Gleichspannungswandler drei Zweige mit je einem Schaltelement vorgesehen sind, wobei in der Leerlaufphase des Schweißgeräts ein erstes Schaltelement des ersten Zweigs mit einer Leerlaufschaltfrequenz von 2 kHz betrieben und die jeweils verbleibenden Schaltelemente des zweiten und dritten Zweigs deaktiviert werden.

Es kann ein, vorzugsweise über eine Schnittstelle, z.B. einen RS-485 Bus, übermitteltes, Steuersignal eine Umschaltung des Gleichspannungswandlers von der Schweißphase in die Leerlaufphase und/oder von der Leerlaufphase in die Schweißphase bewirken.

Das Steuersignal kann durch Betätigung eines, beispielsweise am Brenner des Schweißgeräts angeordneten, Schalters/Tasters zum vorgesehenen Schweißstart bzw. Schweißende erfolgen. Das Steuersignal kann auch auf andere Weise ausgelöst werden, um den Start oder Stopp der Schweißphase anzukündigen.

Weiters kann ein im Schweißgerät bestimmter Parameter eine Umschaltung von der Schweißphase in die Leerlaufphase und/oder von der Leerlaufphase in die Schweißphase bewirken. Dabei kann natürlich auch das Steuersignal durch den Parameter ausgelöst werden.

Als Parameter kann beispielsweise eine bestimmte, z.B. veränderte, d.h. verringerte oder erhöhte, Schweißspannung und/oder ein bestimmter, z.B. verringerter/erhöhter, Stromfluss auf der Ausgangsseite dienen. Dadurch kann ein Bedarf des Umschaltens in oder aus der Leerlaufphase erkannt werden. Es kann auch eine ereignisgesteuerte Umschaltung in oder aus der Leerlaufphase erfolgen, wobei als Ereignis beispielsweise ein Kurzschluss während des Schweißvorgangs angesehen werden kann.

Der Parameter kann beispielsweise von einem Regler oder einer Steuerung des Schweißgeräts erkannt und/oder verarbeitet werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 einen Gleichspannungswandler,
Fig.2 ein Schweißgerät mit einem Gleichspannungswandler und einem Schweißleistungsteil,
Fig.3 einen einzweigigen Aufwärtswandler als Gleichspannungswandler,
Fig.4 einen mehrzweigigen Aufwärtswandler als Gleichspannungswandler,
Fig.5 ein Schweißgerät mit einem Gleichrichter einem mehrphasigen Aufwärtswandler und einem Schweißleistungsteil,
Fig.6 einen Verlauf der Schaltzustände der Schaltelemente,
Fig.7 einen Verlauf der Ausgangsgleichspannung.

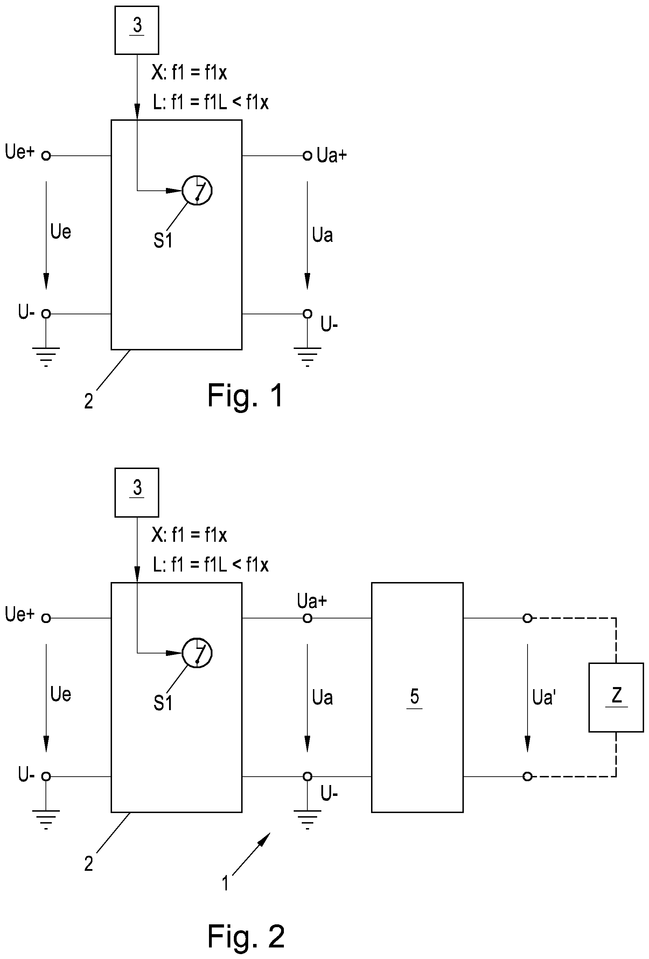

Fig. 1 stellt einen schematischen Gleichspannungswandler 2 dar. Ein Gleichspannungswandler 2 wandelt eine Eingangsgleichspannung Ue in eine Ausgangsgleichspannung Ua, wobei die Eingangsgleichspannung Ue an einem Eingangsanschluss Ue+ anliegt und die Ausgangsgleichspannung Ua an einem Ausgangsanschluss Ua+ anliegt. Genauer gesagt liegt die Eingangsgleichspannung Ue zwischen dem Eingangsanschluss Ue+ und einer Masse U- an und die Ausgangsgleichspannung Ue zwischen dem Ausgangsanschluss Ue- und einer Masse U-an. Üblicherweise wird im Gleichspannungswandler 2 eine gemeinsame Masse U-verwendet, es ist jedoch auch beispielsweise möglich durch Verwendung einer entsprechenden Schaltungstopologie für die Eingangsseite und die Ausgangsseite unterschiedliche Massen U- zu verwenden, was durch eine Potentialtrennung, beispielsweise über einen Transformator, realisiert werden kann.

Ein Gleichspannungswandler 2 kann in einem Schweißgerät 1 verwendet werden, wie es in Fig. 2 schematisch dargestellt ist. Es wird vom Gleichspannungswandler 2 eine Ausgangsgleichspannung Ua am Ausgangsanschluss Ua+ erzeugt. Das Schweißgerät 1 umfasst weiters ein Schweißleistungsteil 5 mit einem Leistungsteileingang und einem Leistungsteilausgang. Das Schweißleistungsteil regelt in einer Schweißphase X die am Leistungsteileingang anliegende Ausgangsgleichspannung Ua auf eine am Leistungsteilausgang anliegende Schweißspannung Ua'. Die Schweißspannung Ua' kann kontinuierlich oder auch gepulst vorliegen. In der Leerlaufphase L liegt am Leistungsteileingang des Schweißleistungsteils 5 die Ausgangsgleichspannung Ua an. Die Regelung auf die Schweißspannung Ua' ist hier lediglich beispielhaft angeführt. Ebenso kann auf einen Schweißstrom oder abwechselnd auf einen Schweißstrom und die Schweißspannung geregelt werden. Die Regelung ist entsprechend auf den Schweißprozess abgestimmt.

Der Gleichspannungswandler 2 wird während der Schweißphase X von einer Regeleinheit 3, welche analog oder digital ausgebildet sein kann, mit einer Schaltfrequenz f1 entsprechend einer Normalschaltfrequenz f1x betrieben. Das bedeutet, dass ein Schaltelement S1 des Gleichspannungswandlers 2 mit einer Schaltfrequenz f1 geschaltet wird. Erfindungsgemäß wird die Schaltfrequenz f1 je nach Phase in eine Normalschaltfrequenz f1x - welche der Schaltfrequenz f1 entspricht - und eine Leerlaufschaltfrequenz f1L aufgeteilt und dementsprechend umgeschaltet.

Nach der Schweißphase X wird das Schweißgerät 1 in eine Leerlaufphase L geschaltet. Nach dem Stand der Technik wird der Gleichspannungswandler 2 während dieser Leerlaufphase L weiterhin mit der Normalschaltfrequenz f1x und mit dementsprechenden Verlusten betrieben. Dem gegenüber wird erfindungsgemäß in der Leerlaufphase L des Schweißgeräts 1 der Gleichspannungswandler 2 jedoch mit einer Leerlaufschaltfrequenz f1L kleiner der Normalschaltfrequenz f1x betrieben. Somit werden die Verluste minimal gehalten und die Ausgangsgleichspannung Ua sinkt in der Leerlaufphase L nicht ab. Damit wird erreicht, dass nach dem Ende der Leerlaufphase L und mit dem Beginn der Schweißphase X auch tatsächlich sofort mit dem Schweißvorgang begonnen werden kann.

In der Schweißphase X ist eine Last Z (in Fig. 2 strichliert eingezeichnet) - bei einem Schweißprozess ein Lichtbogen - mit dem Ausgangsanschluss Ua+ oder mit dem Leistungsteilausgang des Schweißleistungsteil 5 verbunden, womit Energie von der Eingangsseite auf die Ausgangsseite übertragen wird. Während der Schweißphase X brennt ein Lichtbogen, welcher zumindest mit Beginn der Schweißphase X gezündet wird. In der Leerlaufphase L ist die Last nicht mit dem Ausgangsanschluss Ua+ oder mit dem Schweißleistungsteil 5 verbunden, womit keine Energie auf der Ausgangseite abgegeben wird und kein Lichtbogen brennt.

Es treten während der erfindungsgemäßen Leerlaufphase L geringere Schaltverluste auf als bei der Schweißphase X, da das Schaltelement S1 aufgrund der geringeren Leerlaufschaltfrequenz f1L seltener schaltet. Es wird dem Schweißgerät 1 durch den Gleichspannungswandler 2 weiterhin eine ausreichend hohe Ausgangsgleichspannung Ua zur Verfügung gestellt, um im Schweißgerät 1 vorhandene Ansteuerelektronikeinheiten, Regelungseinheiten, Displays, etc. zu versorgen.

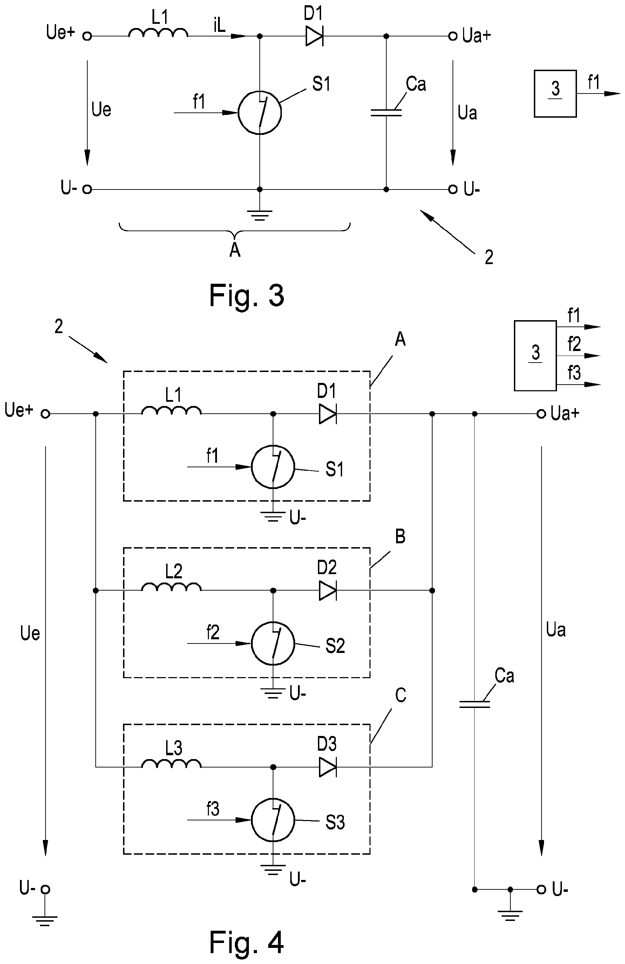

In Fig. 3 ist ein einfacher einzweigiger Aufwärtswandler als Gleichspannungswandler 2 dargestellt. Der Aufwärtswandler umfasst einen einzigen Zweig A mit einer Induktivität L1, einer Freilaufdiode D1 und einem Schaltelement S1. Die Induktivität L1 und die Freilaufdiode D1 sind in Serie geschaltet. Ein erster Spulenanschluss der Inkuktivität L1 ist mit dem Eingangsanschluss Ue+ verbunden und ein zweiter Spulenanschluss der Induktivität L1 in Serie mit einer Anode der Freilaufdiode D1. Eine Kathode der Freilaufdiode D1 ist mit dem Ausgangsanschluss Ua+ verbunden. Der Gleichspannungswandler 2 ist an seinem Ausgangsanschluss Ua+ weiters mit einem ersten Kondensatoranschluss eines Zwischenkreiskondensators Ca verbunden, der zweite Kondensatoranschluss des Zwischenkreiskondensators Ca ist mit Masse U- verbunden. Die Ausgangsgleichspannung Ua liegt somit am Zwischenkreiskondensator Ca an.

Der zweite Spulenanschluss der Induktivität L1, (und damit auch die Anode der Freilaufdiode D1) ist somit über das Schaltelement S1 (z. B. ein MOSFET, GTO-Thyristor, Bipolartransistor etc.) mit Masse U- verbunden. Das Schaltelement S1 wird mit einer Schaltfrequenz f1 geöffnet und geschlossen, wobei zur Steuerung der Schaltfrequenz f1 eine Regeleinheit 3 vorgesehen ist. Typische Schaltfrequenzen f1 sind 20 kHz bis 150 kHz, wobei insbesondere unter Verwendung von fortschrittlichen Halbleitertechnologien auch höhere Schaltfrequenzen f1 vorstellbar sind. Der Tastgrad des Schaltelements S1 beträgt beispielsweise 0 bis 95%.

Bei einem geschlossenen Schaltelement S1 ist somit die Anode der Freilaufdiode D1 mit der Masse U- verbunden und bei einem geöffneten Schaltelement S1 von der Masse U-getrennt.

Ist das Schaltelement S1 geschlossen (Leitphase), so ist der zweite Spulenanschluss der Induktivität L1 mit Masse U- verbunden, womit die Eingangsspannung Ue an der Induktivität L1 anliegt. Dadurch fließt über die die Induktivität L ein Spulenstrom iL, welcher ab dem initialen Zeitpunkt des Schließens des Schaltelements S1 ansteigt. Durch den Spulenstrom iL wird in der Induktivität L Energie (zwischen)gespeichert. Da die Anode der Freilaufdiode D1 durch das geschlossene Schaltelement S1 ebenso mit Masse U- verbunden ist, sperrt die Freilaufdiode D1.

Wird das Schaltelement S1 daraufhin geöffnet (Sperrphase), so wird der Spulenstrom iL von der Induktivität L1 aufrecht gehalten. Damit steigt das Potential am zweiten Anschluss der Induktivität L1 und damit ebenso an der Anode der Freilaufdiode D1. Sobald das Potential an der Anode der Freilaufdiode D1 die Spannung an der Kathode der Freilaufdiode D1 um mehr als die Schwellspannung der Freilaufdiode D1 übersteigt, schaltet die Freilaufdiode D1 durch. Der Spulenstrom iL fließt über die Freilaufdiode D1 und den Zwischenkreiskondensator Ca gegen Masse U-, womit der Zwischenkreiskondensator Ca geladen wird. Währenddessen werden zumindest Teile der im Magnetfeld der Induktivität L1 gespeicherte Energie und über die Eingangsgleichspannung Ue gelieferte Energie an den Zwischenkreiskondensator Ca übertragen. Der Zwischenkreiskondensator Ca wird also geladen, während der Strom in der Induktivität L1 sinkt, wobei am Zwischenkreiskondensator Ca die Ausgangsgleichspannung Ua anliegt.

Wird das Schaltelement S1 nach einer Sperrphase abermals geschlossen (Leitphase), so wird die am Zwischenkreiskondensator Ca anliegende Ausgangsgleichspannung Ua durch den Zwischenkreiskondensator Ca erst auf ihren Wert gehalten. Während der Leitphase gibt es keinen direkten Energiefluss von der Eingangsseite zur Ausgangsseite, es wird jedoch die Induktivität L wieder geladen.

Während der Schweißphase X wird das Schaltelement S1 von einer Regeleinheit 3 mit einer Schaltfrequenz f1 entsprechend einer Normalschaltfrequenz f1x geschaltet. Diese Normalschaltfrequenz f1x und der zugehörige Tastgrad sind derart auszulegen, um ein Absinken der Ausgangsgleichspannung Ua während der Leitphasen des Schaltelements S1 zu verhindern.

Erfindungsgemäß wird in der Leerlaufphase L das Schaltelement mit einer Schaltfrequenz f1 entsprechend einer Leerlaufschaltfrequenz f1L kleiner der Normalschaltfrequenz f1x geschaltet. Vorzugsweise übernimmt die Regeleinheit 3 diese Umschaltung. Damit werden die Verluste wesentlich reduziert und es wird verhindert, dass die Ausgangsgleichspannung Ua während der Leerlaufphase L auf einen geringeren Wert absinkt, um sicherzustellen, dass nach dem Ende der Leerlaufphase L und dem Beginn der Schweißphase X sofort mit dem Schweißvorgang begonnen werden kann. Hierzu sind natürlich auch die Leerlaufschaltfrequenz f1L und der zugehörige Tastgrad entsprechend auszulegen, um auch in der Leerlaufphase L ein Absinken der Ausgangsgleichspannung Ua während der Leitphasen des Schaltelements S1 zu verhindern.

Fig. 4 zeigt einen mehrzweigigen Aufwärtswandler als Gleichspannungswandler 2. Der Aufbau ist identisch mit dem in Fig.3 dargestellten Gleichspannungswandler 2, abgesehen davon, dass nicht nur ein Zweig A, sondern zumindest ein weiterer Zweig B, C vorgesehen ist. Es sind also insgesamt eine Mehrzahl paralleler Zweige A, B, C vorgesehen, in diesem Fall drei Zweige A, B, C - also zwei weitere Zweige B, C. Jeder Zweig A, B, C umfasst eine Induktivität L1, L2, L3, ein Schaltelement S1, S2, S3 und eine Freilaufdiode D1, D2, D3, die im jeweiligen Zweig A, B, C analog zum oben beschriebenen einzweigigen Gleichspannungswandler 2 verschaltet sind. Die ersten Spulenanschlüsse der Induktivitäten L1, L2, L3 sind gemeinsam mit dem Eingangsanschluss Ue verbunden, die Kathoden der Freilaufdioden D1 sind gemeinsam mit dem ersten Kondensatoranschluss des Zwischenkreiskondensators Ca und damit mit dem Ausgangsanschluss Ua verbunden. Es kann auch für jeden Zweig A, B, C ein eigener Zwischenkreiskondensator Ca vorgesehen sein (nicht dargestellt), wobei diese Zwischenkreiskondensatoren Ca parallel zueinander geschaltet sind.

Die zweiten Anschlüsse der Schaltelemente S1, S2, S3 sind jeweils mit Masse U- verbunden und werden von der Regeleinheit 3 jeweils mit einer Schaltfrequenz f1, f2, f3 angesteuert, d.h. geschlossen und geöffnet.

Zur Steuerung der Schaltfrequenzen f1, f2, f3 ist eine Regeleinheit 3 vorgesehen. Durch die Ausführung in mehreren Zweigen A, B, C kann eine höhere Leistung auf der Ausgangsseite erzeugt werden als wenn ein Zweig A, B, C (mit gleicher Dimensionierung) alleine aktiv wäre, es entsteht jedoch in der Leerlaufphase L aufgrund der Schaltverluste der hier höheren Anzahl an Schaltelementen S1, S2, S3 und Induktivitäten L1, L2, L3 ebenso eine höhere Leerlaufverlustleistung.

In der Schweißphase X werden die weiteren Schaltelemente S2, S3 jeweils mit einer weiteren Schaltfrequenz f2, f3 entsprechend einer Normalschaltfrequenz f2x, f3x geschaltet, wobei die Normalschaltfrequenzen f2x, f3x der Normalschaltfrequenz f1x entsprechen können.

Erfindungsgemäß werden in der Leerlaufphase L die weiteren Schaltelemente S2, S3 jeweils mit einer weiteren Schaltfrequenz f2, f3 entsprechend einer weiteren Leerlaufschaltfrequenz f2L, f3L kleiner der weiteren Normalschaltfrequenz f2x, f3x geschaltet. Die weiteren Leerlaufschaltfrequenzen f2L, f3L können der Leerlaufschaltfrequenz f1L entsprechen. Es kann/können in der Leerlaufphase L auch eines oder mehrere der weitere Schaltelemente S2, S3 deaktiviert werden. Zumindest ein Schaltelement S1 schaltet währenddessen jedoch mit der Leerlaufschaltfrequenz f1L.

Es können auch die weiteren Schaltelemente S2, S3 jeweils mit einer weiteren Leerlaufschaltfrequenz f2L, f3L als weitere Schaltfrequenz f2, f3 geschaltet werden, wobei die weiteren Leerlaufschaltfrequenzen f2L, f3L jeweils kleiner als die Normalschaltfrequenz f2x, f3x sind, womit auch für die weiteren Schaltelemente S2, S3 geringere Schaltverluste auftreten, da diese ebenso seltener schalten als bei der Schweißphase X.

Vorzugsweise werden in der Leerlaufphase L alle Schaltelemente S1, S2, S3 mit Leerlaufschaltfrequenzen f1L, f2L, f3L kleiner der jeweiligen Normalschaltfrequenz f1x, f2x, f3x geschaltet, wobei die Leerlaufschaltfrequenzen f1L, f2L, f3L vorzugsweise identisch sind.

Ganz besonders vorteilhaft ist es jedoch, wenn ein Schaltelement S1 eines Zweigs A während der Leerlaufphase L mit der Leerlaufschaltfrequenz f1L kleiner der Normalschaltfrequenz f1x geschaltet wird und die weiteren Schaltelemente S2, S3 der weiteren Zweige B, C deaktiviert werden (Sperrphase), was dauerhaftes Öffnen der weiteren Schaltelemente S2, S3 bedeutet. Damit kann eine besonders geringe Leerlaufverlustleistung erreicht werden.

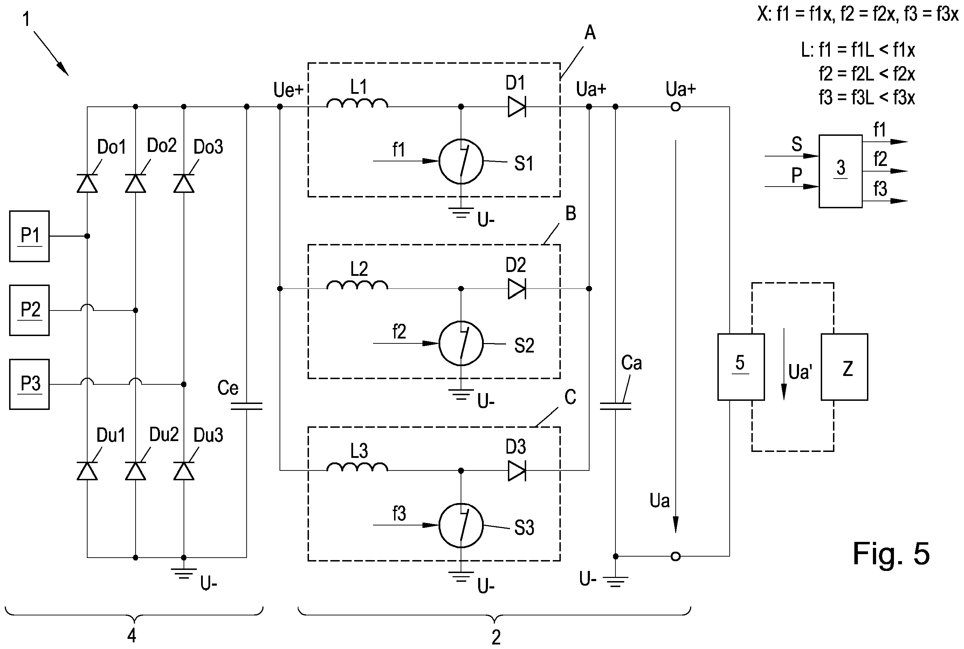

Fig. 5 stellt schematisch ein Schweißgerät 1 dar, welches beispielhaft einen mehrzweigigen Aufwärtswandler als Gleichspannungswandler 2 umfasst. Es sind natürlich auch Schweißgeräte 1 mit einzweigigen Aufwärtswandlern oder einzweigigen Abwärtswandler oder mehrzweigigen Abwärtswandlern vorstellbar. Auch die die Anzahl der Zweige A, B, C ist nur beispielhaft drei, jede Anzahl an Zweigen A, B, C ist vorstellbar. Grundsätzlich können auch andere Topologien für den Gleichspannungswandler 2 eingesetzt werden.

Das Schweißgerät 1 umfasst weiters eine Gleichrichterstufe 4 auf der Eingangsseite. Die Gleichrichterstufe 4 ist mit den drei Netzphasen P1, P2, P3 eines Wechselstromnetzes verbunden und umfasst jeweils eine untere Gleichrichterdiode Du1, Du2, Du3 und eine obere Gleichrichterdiode Do1, Do2, Do3 pro Netzphase P1, P2, P3. Selbstverständlich können die Gleichrichterdioden Du1, Du2, Du3, Do1, Do2, Do3 auch durch Schaltelemente gebildet sein. Die Anoden der unteren Gleichrichterdioden Du1, Du2, Du3 sind jeweils mit der Masse U- verbunden und die Kathoden der unteren Gleichrichterdioden Do1, Do2, Do3 mit der jeweiligen Netzphasen P1, P2, P3. Die Anoden der oberen Gleichrichterdioden Do1, Do2, Do3 sind ebenso mit der jeweiligen Netzphase P1, P2, P3 verbunden, die Kathoden der oberen Gleichrichterdioden Do1, Do2, Do3 sind mit dem Eingangsanschluss Ue+ des Gleichspannungswandlers 2 verbunden. Weiters ist in der Gleichrichterstufe 4 ein Glättungskondensator Ce vorgesehen, welcher die Kathoden der oberen Gleichrichterdioden Do1, Do2, Do3 mit den Anoden der unteren Gleichrichterdioden Du1, Du2, Du3 verbindet. Die Funktionsweise einer Gleichrichterstufe 4 ist grundlegend bekannt, weshalb an dieser Stelle nicht näher darauf eingegangen wird.

Die Gleichrichterstufe 4 ist als optional anzusehen. Es kann auch ein Schweißgerät 1 vorgesehen sein, welches keine Gleichrichterstufe 4 umfasst und beispielsweise im Interleaved Modus betrieben wird.

Der Gleichspannungswandler 2 des Schweißgeräts 1 wird, wie es anhand der Fig. 3 und 4 beschrieben wurde, betrieben. Zur Steuerung der Schaltfrequenzen f1, f2, f3 ist eine Regeleinheit 3 vorgesehen. In der Schweißphase X entsprechen die Schaltfrequenzen f1, f2, f3 der Normalschaltfrequenz f1x, f2x, f3x, beispielsweise 35 kHz. In der Schweißphase X des Schweißgeräts 1 ist eine Last Z (in Fig. 5 strichliert eingezeichnet) mit der Ausgangsseite des Gleichspannungswandlers 2 über das Schweißleistungsteil 5 verbunden. In der Leerlaufphase L wird keine Energie auf der Ausgangsseite an die Last Z abgegeben.

In der Leerlaufphase L des Schweißgeräts 1 wird zumindest ein Schaltelement S1 mit einer Leerlaufschaltfrequenz f1L als Schaltfrequenz f1 geschaltet, wobei die Leerlaufschaltfrequenz f1L kleiner als die Normalschaltfrequenz f1x ist. Die Ausgangsgleichspannung Ua am Zwischenkreiskondensator Ca bleibt somit in der Leerlaufphase L aufrechterhalten.

Es kann ein, vorzugsweise über eine Schnittstelle übermitteltes, Steuersignal S und/oder ein im Schweißgerät 1 bestimmter Parameter P eine Umschaltung des Gleichspannungswandlers 2 von der Schweißphase X in die Leerlaufphase L und/oder von der Leerlaufphase L in die Schweißphase X bewirken. Dies kann erfolgen, indem die Regeleinheit 3 mit dem Steuersignal S und/oder dem Parameter P versorgt wird, wie in Fig. 5 angedeutet.

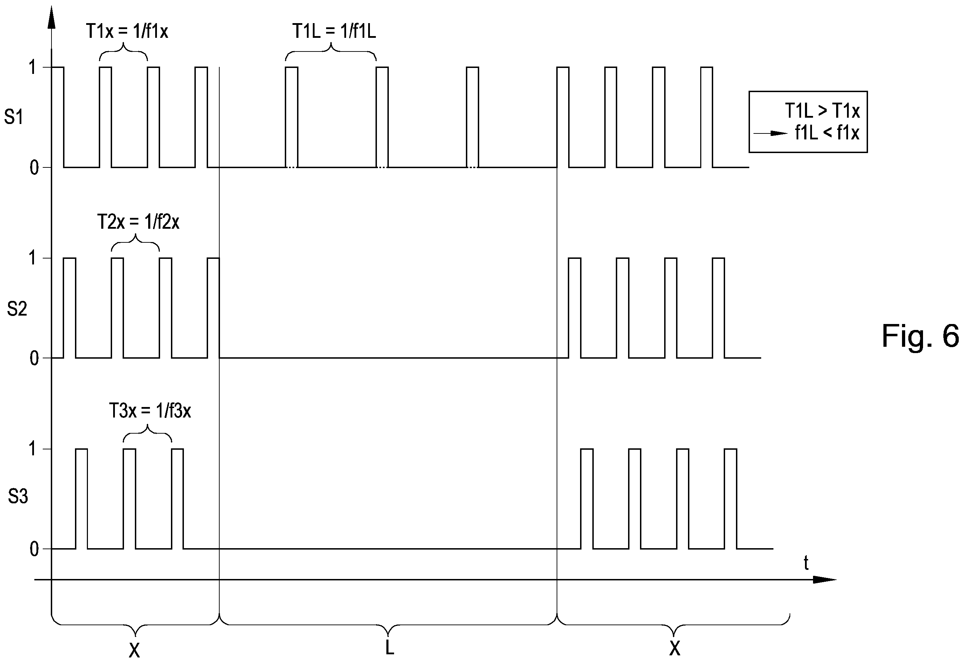

Fig. 6 stellt beispielhaft die Schaltmuster der Schaltelemente S1, S2, S3 eines dreizweigigen Gleichspannungswandlers 2 dar. Die Schaltelemente S1, S2, S3 werden entsprechend in der Schweißphase X phasenverschoben angesteuert. Wie zu sehen ist, wird in der Leerlaufphase L das Schaltelement S1 mit einer Leerlaufschaltfrequenz f1L kleiner der Normalschaltfrequenz f1x geschaltet. Vorteilhafterweise werden (wie dargestellt) die weiteren Schaltelemente S2, S3 in der Leerlaufphase L deaktiviert.

Entsprechend des Stands der Technik würden in der Leerlaufphase L alle Schaltelemente S1, S2, S3 weiterhin mit der jeweiligen Normalschaltfrequenz f1x, f2x, f3x betrieben werden, womit Energieverluste entstehen.

Um während der Leerlaufphase L Energieverluste zu verhindern, kann der Gleichspannungswandler 2 in der Leerlaufphase des Schweißgeräts auch deaktiviert, d.h. abgeschaltet werden. Dies erfolgt, indem die Schaltelemente S1, S2, S3 nicht mehr angesteuert werden und somit geöffnet bleiben. Dadurch sinkt jedoch die Ausgangsgleichspannung Ua ab, da sich der Zwischenkreiskondensator Ca auf der Ausgangsseite während der Leerlaufphase L entlädt und nicht mehr von der Eingangsseite mit Energie gespeist wird. Damit kann der Fall eintreten, dass dem Schweißgerät 1 zu wenig Spannung für den Betrieb der Ansteuerelektronikeinheiten, Regelungseinheiten, Displays, etc. zur Verfügung steht, weshalb diese anderweitig mit Energie versorgt werden müssen.

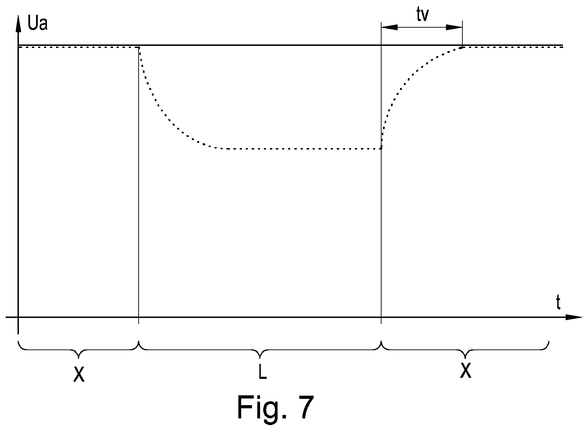

Weiters kann bei einer Deaktivierung des Gleichspannungswandlers 2 während der Leerlaufphase L des Schweißgeräts 1 das Problem auftreten, dass für eine auf die Leerlaufphase L folgende weitere Schweißphase des Schweißgeräts der Gleichspannungswandler 2 erst wieder in einen geeigneten Betriebszustand gelangen muss, um die auf der Ausgangsseite erforderliche Energie bzw. Ausgangsgleichspannung Ua zu Verfügung stellen zu können. Bis dieser geeignete Betriebszustand erreicht wird, kann einige Zeit vergehen, womit es zu einer Verzögerungszeit tv von beispielsweise im Bereich von 50 ms kommen kann, bis das Schweißgerät 1 für einen weiteren Schweißvorgang bereit ist. Somit kann bei Deaktivierung der Schaltelemente S1, S2, S3 und damit des Gleichspannungswandlers 2 in der Leerlaufphase L des Schweißgeräts 1 ein neuerlicher unmittelbarer Start des tatsächlichen Schweißvorgangs, d.h. ein Zünden des Lichtbogens, nicht kontrolliert bzw. nicht zum vorgesehenen Zeitpunkt erfolgen, sodass die stabile Schweißphase verspätet beginnt oder der Lichtbogen nicht bzw. schwer zündet. (Schweißphase beginnt mit der Zündung des Lichtbogens). Es ist in Fig. 7 die Ausgangsgleichspannung Ua für den Fall einer Deaktivierung aller Zweige während der Leerlaufphase L strichliert dargestellt. Wie zu sehen ist, sinkt die Ausgangsgleichspannung Ua während der Leerlaufphase L bei einem Aufwärtswandler auf die Eingangsgleichspannung Ue, ab. Nachdem wieder in die Schweißphase X geschaltet wird, dauert es eine gewisse Verzögerungszeit tv, hier 50 ms, bis die Ausgangsgleichspannung Ua wieder ihren vollen Wert erreicht, womit der Schweißvorgang erst zeitverzögert starten kann.

Dem gegenüber ist in Fig. 7 die Ausgangsgleichspannung Ua für ein erfindungsgemäßes Schalten eines oder mehrerer Schaltelemente S1, S2, S3 während der Leerlaufphase L durchgezogen dargestellt. Da zumindest ein Schaltelement S1, S2, S3 weiterhin mit einer Leerlaufschaltfrequenz f1L, f2L, f3L schaltet, bleibt die Ausgangsgleichspannung Ua auch in der Leerlaufphase L aufrecht. Damit kann nach dem Ende der Leerlaufphase L und dem Beginn der Schweißphase X sofort mit dem Schweißvorgang begonnen werden, da der Gleichspannungswandler 2 kontinuierlich die erforderliche Ausgangsgleichspannung Ua liefert. Der Gleichspannungswandler 2 stellt dem Schweißleistungsteil 5 somit dauerhaft die für einen optimalen Start der Schweißphase X benötigte Ausgangsgleichspannung Ua zur Verfügung. Verzögerungen zwischen dem geplanten Start des Schweißvorgangs und einem tatsächlichen Umschalten des Gleichspannungswandlers 2 in die Schweißphase X werden durch die bereits am Gleichspannungsausgang Ua+ ausreichend hohe Ausgangsgleichspannung Ua verhindert. Der Start des Schweißvorgangs erfolgt also unmittelbar nach der Leerlaufphase L bei Beginn der Schweißphase X. Die Verluste des Gleichspannungswandlers 2 sind dabei minimal.

## Patentansprüche

1. Verfahren zum Betreiben eines Schweißgeräts (1), wobei ein Gleichspannungswandler (2) des Schweißgeräts (1) eine an einem Eingangsanschluss (Ue+) anliegende Eingangsgleichspannung (Ue) in eine an einem Ausgangsanschluss (Ua+) anliegende Ausgangsgleichspannung (Ua) wandelt, wobei zumindest ein Schaltelement (S1) eines Zweiges (A) des Gleichspannungswandlers (2) mit einer Schaltfrequenz (f1) geschaltet wird, wobei für das Schweißgerät (1) eine Schweißphase (X) vorgesehen ist, während welcher die Schaltfrequenz (f1) einer Normalschaltfrequenz (f1x) entspricht, **dadurch gekennzeichnet, dass** für das Schweißgerät (1) eine Leerlaufphase (L) vorgesehen ist, während welcher das zumindest eine Schaltelement (S1) mit einer Schaltfrequenz (f1) entsprechend einer Leerlaufschaltfrequenz (f1L) kleiner der Normalschaltfrequenz (f1x) geschaltet wird.

2. Verfahren nach Anspruch 1, **dadurch gekennzeichnet, dass** zumindest ein weiteres Schaltelement (S2, S3) zumindest eines weiteren Zweigs (B, C) des Gleichspannungswandlers mit zumindest einer weiteren Schaltfrequenz (f2, f3) geschaltet wird, wobei in der Schweißphase (X) die zumindest eine weitere Schaltfrequenz (f2, f3) einer weiteren Normalschaltfrequenz (f2x, f3x) entspricht, um Energie vom Eingangsanschluss (Ue+) zum Ausgangsanschluss (Ua+) zu übertragen.

3. Verfahren nach Anspruch 2, **dadurch gekennzeichnet, dass** die zumindest eine weitere Normalschaltfrequenz (f2x, f3x) der Normalschaltfrequenz (f1x) entspricht.

4. Verfahren nach einem der Ansprüche 1 bis 3, **dadurch gekennzeichnet, dass** in der Leerlaufphase (L) die zumindest eine weitere Schaltfrequenz (f2, f3) mit einer weiteren Leerlaufschaltfrequenz (f2L, f3L) kleiner der weiteren Normalschaltfrequenz (f2x, f3x) geschaltet wird.

5. Verfahren nach Anspruch 4, **dadurch gekennzeichnet, dass** die zumindest eine weitere Leerlaufschaltfrequenz (f2L, f3L) der Leerlaufschaltfrequenz (f1L) entspricht.

6. Verfahren nach einem der Ansprüche 1 bis 3, **dadurch gekennzeichnet, dass** in der Leerlaufphase (L) das zumindest eine Schaltelement (S1) und/oder zumindest eines der weiteren Schaltelemente (S2, S3) deaktiviert wird.

7. Verfahren nach einem der Ansprüche 1 bis 6, **dadurch gekennzeichnet, dass** ein, vorzugsweise über eine Schnittstelle, übermitteltes Steuersignal (S) eine Umschaltung von der Schweißphase (X) in die Leerlaufphase (L) und/oder von der Leerlaufphase (L) in die Schweißphase (X) bewirkt.

8. Verfahren nach einem der Ansprüche 1 bis 7, **dadurch gekennzeichnet, dass** ein im Schweißgeräts bestimmter Parameter (P) eine Umschaltung von der Schweißphase (X) in die Leerlaufphase (L) und/oder von in der Leerlaufphase (L) in die Schweißphase (X) bewirkt.

9. Gleichspannungswandler (2) für ein Schweißgerät (1) wobei der Gleichspannungswandler (2) ausgestaltet ist eine an einem Eingangsanschluss (Ue) anliegende Eingangsgleichspannung (Ue) in eine an einem Ausgangsanschluss (Ua) anliegende Ausgangsgleichspannung (Ua) zu wandeln, wobei der Gleichspannungswandler (2) zumindest ein Schaltelement (S1) in einem Zweig (A) und eine Regeleinheit (3) umfasst, wobei die Regeleinheit (3) ausgestaltet ist, in eine Schweißphase (X) des Schweißgeräts (1) das Schaltelement (S1) mit einer Schaltfrequenz (f1) entsprechend einer Normalschaltfrequenz (f1) zu schalten, **dadurch gekennzeichnet, dass** die Regeleinheit (3) ausgestaltet ist, in einer Leerlaufphase (L) des Schweißgeräts (1) das zumindest eine Schaltelement (S1) mit einer Schaltfrequenz (f1) entsprechend einer Leerlaufschaltfrequenz (f1L) kleiner der Normalschaltfrequenz (f1x) zu schalten.

10. Gleichspannungswandler (2) nach Anspruch 9, **dadurch gekennzeichnet, dass** der Zweig (A) eine Induktivität (L1) und eine Freilaufdiode (D1) umfasst, wobei ein erster Spulenanschluss der Induktivität (L1) mit dem Eingangsanschluss (Ue+) verbunden ist und ein zweiter Spulenanschluss der Induktivität (L) mit einem ersten Schalteranschluss des Schaltelements (S1) und einer Anode der Freilaufdiode (D1) verbunden ist, wobei ein zweiter Schalteranschluss des Schaltelement (S1) mit Masse (U-) verbunden ist und eine Kathode der Freilaufdiode (D1) mit dem Ausgangsanschluss (Ua+) verbunden ist.

11. Gleichspannungswandler (2) nach Anspruch 10, **dadurch gekennzeichnet, dass** der Gleichspannungswandler (2) zumindest einen weiteren Zweig (B, C) mit zumindest einem weiteren Schaltelement (S2, S3), zumindest einer weiteren Induktivität (L) und zumindest einer weiteren Freilaufdiode (D) umfasst, wobei im zumindest einen weiteren Zweig (B, C) jeweils ein erster Spulenanschluss der zumindest einen weiteren Induktivität (L) mit der Eingangsspannung (Ue) verbunden ist und jeweils ein zweiter Spulenanschluss der zumindest einen weiteren Induktivität (L) mit jeweils einem ersten Schalteranschluss des zumindest einen weiteren Schaltelements (S2, S3) und jeweils einer Anode der zumindest einen weiteren Freilaufdiode (D2) verbunden ist, wobei jeweils ein zweiter Schalteranschluss des zumindest einen weiteren Schaltelements (S2, S3) mit Masse (U-) verbunden ist und jeweils eine Kathode der zumindest einen Freilaufdiode (D) mit dem Ausgangsanschluss (Ua+) verbunden ist, **und dass** die Regeleinheit (3) ausgestaltet ist, während der Schweißphase (X) des Schweißgeräts (1) das zumindest eine weitere Schaltelement (S2, S3) mit zumindest einer weitere Schaltfrequenz (f2, f3) entsprechend einer weiteren Normalschaltfrequenz (f2x, f3x) zu schalten.

12. Gleichspannungswandler (2) nach Anspruch 11, **dadurch gekennzeichnet, dass** die Regeleinheit (3) ausgestaltet ist, in der Leerlaufphase (L) des Schweißgeräts (1) das zumindest eine weitere Schaltelement (S2, S3) mit einer weiteren Leerlaufschaltfrequenz (f2L, f3L) kleiner der weiteren Normalschaltfrequenz (f2x, f3x), vorzugsweise entsprechend der Leerlaufschaltfrequenz (f1L), zu schalten.

13. Gleichspannungswandler (2) nach einem der Ansprüche 9 bis 11, **dadurch gekennzeichnet, dass** die Regeleinheit (3) ausgestaltet ist in der Leerlaufphase (L) des Schweißgeräts (1) das zumindest eine Schaltelement (S1) und/oder zumindest eines der weiteren Schaltelemente (S2, S3) zu deaktivieren.

14. Schweißgerät (1) umfassend einen Gleichspannungswandler (2) nach einem der Ansprüche 8 bis 13, und ein Schweißleistungsteil (5), wobei das Schweißleistungsteil (5) ausgestaltet ist, in der Schweißphase (X) die Ausgangsgleichspannung (Ua) auf eine Schweißspannung (Ua') und/oder einen Schweißstrom zu regeln.
